# FASCICULE DE BREVET EUROPEEN

(11) **EP 2 281 337 B1**
(45) Date de publication et mention de la délivrance du brevet: **26.04.2017**
(21) Numéro de dépôt: 09757567.4
(22) Date de dépôt: 03.06.2009
(51) Int. Cl.: H02P 27/04, H02P 3/02, H02M 1/00, H02M 3/07, H02M 5/458

(54) **DISPOSITIF DE RECUPERATION D'ENERGIE DANS UN VARIATEUR DE VITESSE**
VERFAHREN ZUR ENERGIERÜCKGEWINNUNG IN EINEM DREHZAHL VARIABLEN ANTRIEB
METHOD FOR RECOVERING POWER IN A VARIABLE SPEED DRIVE

(30) Priorité: 06.06.2008 FR 0853773
(43) Date de publication de la demande: 09.02.2011
(73) Titulaire: Schneider Toshiba Inverter Europe SAS, 27120 Pacy sur Eure (FR)
(72) Inventeur: BAUDESSON, Philippe, F-27220 La Boissiere (FR); GRBOVIC, Petar, F-27210 Pacy sur Eure (FR); LE MOIGNE, Philippe, F-59310 Nomain (FR)
(74) Mandataire: Dufresne, Thierry
(86) Numéro de dépôt international: PCT/EP2009/056836
(87) Numéro de publication internationale: WO 2009/147186

(56) Documents cités:
- EP-A- 1 641 110
- US-A1- 2001 017 234
- US-A1- 2006 267 527

## Description

La présente invention se rapporte à un variateur de vitesse comportant un dispositif de récupération d'énergie intégrant un module de stockage de l'énergie récupérée. Un tel variateur est utilisé en particulier pour piloter un moteur électrique dans des applications ayant de fréquentes accélérations et décélérations comme les applications de levage ou les applications de régulation de position.

Un dispositif de récupération d'énergie sert habituellement à pouvoir stocker l'énergie quand le moteur est en mode freinage (ou mode récupération), puis à restituer l'énergie ainsi stockée quand le moteur est en mode entraînement (ou mode moteur), et éventuellement à fournir une énergie de secours en cas de disparition du réseau d'alimentation du variateur.

Des documents antérieurs tels que US2001017234, EP1641110, US6,742,630, US6,938,733, WO2006/016002 ou EP1586527A1 proposent déjà des solutions de récupération d'énergie associées à un variateur de vitesse. Les topologies existantes sont généralement basées sur un convertisseur de puissance additionnel et un module de stockage d'énergie, dans lequel le convertisseur de puissance est relié en parallèle au bus continu de puissance du variateur de vitesse. Le module de stockage d'énergie comporte souvent un ou plusieurs "super-condensateurs" ou une combinaison d'un "super-condensateur" et d'une batterie.

Le terme "super-condensateur" (super-capacitor) ou "ultra-condensateur" (ultra-capacitor) désigne un composant connu qui est capable de stocker une quantité d'énergie électrique plus importante qu'un condensateur classique, proche par exemple d'une batterie de type électrochimique, mais qui peut également admettre des courants de charge et décharge importants comme un condensateur classique, contrairement à une batterie de type électrochimique.

Les solutions existantes ne permettent pas d'amplifier (ou booster) la tension de bus continu à une valeur supérieure à la tension fournie en sortie de redresseur par le réseau d'alimentation du variateur. De même, la tension de bus continu ne peut pas être régulée pour diminuer les oscillations du bus continu de façon à réduire le taux de distorsion des courants moteur et donc l'ondulation de couple lorsque la tension appliquée en sortie de l'onduleur est maximale. De plus, le courant absorbé par le redresseur ne peut pas avoir un taux de distorsion harmonique totale en courant (THDI) en dessous de 30%. Par ailleurs, le facteur d'utilisation des commutateurs utilisés dans le dispositif de récupération d'énergie n'est pas optimisé.

L'objectif de l'invention est donc de proposer un variateur de vitesse comportant un dispositif de récupération d'énergie pour économiser l'énergie, améliorer les performances du variateur et ne présentant pas les inconvénients ci-dessus. En particulier, le dispositif de récupération d'énergie doit notamment permettre de :
- récupérer et stocker de l'énergie électrique lorsque le variateur de vitesse fonctionne en mode freinage.
- restituer au variateur l'énergie électrique stockée en mode freinage.
- réduire à environ 30% le taux de distorsion harmonique totale en courant (THDI) sur les phases du réseau d'alimentation en entrée du variateur.
- supprimer les variations de cette tension de bus continu (fonction ripple free) au niveau de la fréquence réseau (environ 50 Hz), malgré les perturbations éventuelles du réseau d'alimentation externe, même dans le cas d'un variateur ne comportant pas de condensateur de bus (C-less topology). Une régulation de la tension du bus continu permet notamment d'avoir un meilleur contrôle du couple et du flux du moteur.
- augmenter si nécessaire la tension de bus continu fournie par le module redresseur du variateur (fonction boost), ce qui permet d'avoir une réserve d'énergie.

Pour cela, l'invention décrit un variateur de vitesse comprenant un bus continu d'alimentation de puissance doté d'une ligne positive et d'une ligne négative, et un module onduleur alimenté par le bus continu pour fournir une tension variable à une charge électrique. Le variateur comprend un dispositif de récupération d'énergie comporte un premier convertisseur continu/continu comprenant un étage d'entrée et un étage de sortie, l'étage de sortie du premier convertisseur étant relié en série sur la ligne positive du bus continu, un second convertisseur continu/continu comprenant un étage d'entrée et un étage de sortie, l'étage d'entrée du second convertisseur étant relié entre la ligne positive et la ligne négative du bus continu, et un module de stockage de l'énergie électrique qui est connecté en parallèle avec l'étage d'entrée du premier convertisseur et en parallèle avec l'étage de sortie du second convertisseur.

Selon une caractéristique, le module de stockage de l'énergie électrique comporte un ou plusieurs super-condensateurs.

Selon une autre caractéristique, le premier convertisseur continu/continu est un convertisseur monodirectionnel non-isolé qui comporte un interrupteur actif et un interrupteur passif.

Dans le présent document, le terme "interrupteur actif" fait référence à un interrupteur qui est à commutation commandée à l'ouverture et/ou à la fermeture, tel qu'un transistor, un thyristor ou un triac. A l'inverse, le terme "interrupteur passif" fait référence à un interrupteur qui est à commutation spontanée, tel qu'une diode.

Selon une autre caractéristique, l'interrupteur passif est une diode qui est connectée en série sur la ligne positive du bus continu, l'étage de sortie du premier convertisseur étant connecté aux bornes de la diode, et l'étage d'entrée du premier convertisseur étant connecté aux bornes de l'ensemble formé par l'interrupteur actif et l'interrupteur passif reliés en série. L'interrupteur actif est un transistor de puissance qui est commandé par un premier signal de commande généré par le variateur de vitesse.

Selon une autre caractéristique, le second convertisseur continu/continu est un convertisseur bidirectionnel non-isolé qui comporte un premier interrupteur actif relié en série avec un second interrupteur actif. L'étage de sortie du second convertisseur est connecté aux bornes du second interrupteur actif, et l'étage d'entrée du second convertisseur est connecté aux bornes de l'ensemble formé par le premier interrupteur actif et le second interrupteur actif.

Selon une autre caractéristique, le second convertisseur continu/continu est un convertisseur bidirectionnel isolé comprenant un transformateur haute-fréquence.

D'autres caractéristiques et avantages vont apparaître dans la description détaillée qui suit en se référant à un mode de réalisation donné à titre d'exemple et représenté par les dessins annexés sur lesquels :
- la figure 1 montre un exemple simplifié d'architecture d'un variateur conforme à l'invention,
- la figure 2 détaille un mode de réalisation préféré du premier convertisseur continu/continu,
- la figure 3 représente un diagramme de la tension de bus continu et de la tension redressée,
- les figures 4a à 4d illustrent les différents modes de fonctionnement du variateur,
- les figures 5 et 6 détaillent plusieurs modes de réalisation du second convertisseur continu/continu.

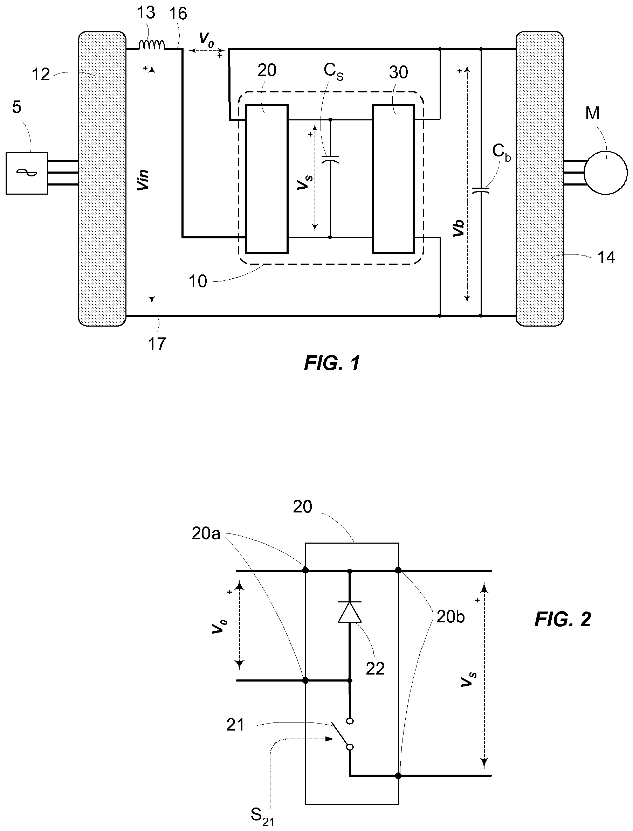

En référence à la figure 1, un variateur de vitesse, de type convertisseur de fréquence, est alimenté par un réseau extérieur d'alimentation 5 triphasé. Le variateur comporte un module redresseur 12 délivrant une tension redressée V_{IN} entre une ligne positive 16 et une ligne négative 17 d'un bus continu d'alimentation de puissance. Préférentiellement, le module redresseur 12 utilise des diodes et ne nécessite pas de thyristors. De préférence, une inductance de filtrage 13 supplémentaire de faible valeur est placée en série sur la ligne positive 16 du bus continu.

Le variateur comporte ensuite un module onduleur 14 alimenté par le bus continu et délivrant une tension variable à une charge électrique extérieure M, en particulier un moteur électrique synchrone ou asynchrone. Un tel module onduleur 14 comporte habituellement des transistors de puissance qui sont pilotés par des signaux de commande provenant d'une unité de commande du variateur de vitesse (non représentée sur les figures). Le variateur peut comporter aussi un condensateur de bus C_{B} connecté entre les lignes positive 16 et négative 17 du bus continu, du côté du module onduleur 14. La tension continue aux bornes de ce condensateur de bus C_{B} est appelée tension de bus V_{B}.

Le variateur comporte un dispositif de récupération d'énergie 10 destiné à récupérer et stocker de l'énergie électrique lorsque la charge électrique M devient entraînante (freinage moteur). Selon l'invention, le dispositif de récupération d'énergie 10 comporte un premier convertisseur continu/continu (ou convertisseur DC/DC) 20, un second convertisseur continu/continu (ou convertisseur DC/DC) 30 et un module de stockage de l'énergie électrique C_{S}. Le premier convertisseur continu/continu 20 comprend un étage d'entrée 20b formé par deux bornes d'entrée et un étage de sortie 20a formé par deux bornes de sortie. De même, le second convertisseur continu/continu 30 comprend un étage d'entrée 30b formé par deux bornes d'entrée et un étage de sortie 30a formé par deux bornes de sortie

L'étage de sortie 20a du premier convertisseur 20 est relié en série sur la ligne positive 16 du bus continu, entre l'inductance de filtrage 13 et le condensateur de bus C_{B}. Il existe une tension V₀ entre les deux bornes de cet étage de sortie 20a, de telle sorte que : V_{B} = V_{IN} + V₀, en ne tenant pas compte de la tension aux bornes de l'inductance 13. L'étage d'entrée 30b du second convertisseur 30 est relié entre la ligne positive 16 et la ligne négative 17 du bus continu, en amont du condensateur de bus C_{B}, c'est-à-dire entre le module redresseur 12 et le condensateur de bus C_{B}.

Le module de stockage C_{S} est connecté en parallèle avec l'étage d'entrée 20b du premier convertisseur 20 et en parallèle avec l'étage de sortie 30a du second convertisseur 30. La tension aux bornes du module de stockage C_{S}, c'est-à-dire aux bornes de l'étage de sortie 30a et aux bornes de l'étage d'entrée 20b, est appelée V_{S}. Préférentiellement, le module de stockage C_{S} est composé d'un ou de plusieurs super-condensateurs, de façon à permettre le stockage d'une grande quantité d'énergie électrique et à permettre des courants élevés de charge/décharge.

Le premier convertisseur 20 est un convertisseur continu/continu monodirectionnel qui n'est pas isolé. Il reçoit en entrée la tension V_{S} du module de stockage C_{S} et délivre en sortie la tension V₀ sur la ligne positive 16 du bus continu. Un mode de réalisation très simple du premier convertisseur 20 est détaillé en figure 2. Il comprend simplement un interrupteur passif 22 en série avec un interrupteur actif 21. De façon préférée, l'interrupteur actif est un transistor de puissance 21 de type IGBT, MOSFET ou autre, et l'interrupteur passif est une diode 22 dont l'anode est placée du côté de l'interrupteur actif 21. Le transistor de puissance 21 est piloté par un signal de commande S₂₁ provenant de l'unité de commande du variateur de vitesse. Le signal de commande S₂₁ est un signal à modulation de large d'impulsion (PWM - Pulse Width Modulation) qui permet notamment de faire varier la tension de sortie V₀ du premier convertisseur 20.

L'étage de sortie 20b du premier convertisseur 20 est directement connecté aux bornes de la diode 22, et l'étage d'entrée 20a du premier convertisseur 20 est directement connecté aux bornes de l'ensemble formé par le transistor de puissance 21 et la diode 22 reliés en série. La diode 22 est donc placée en série sur la ligne positive 16 du bus continu et la tension V_{D} aux bornes de la diode est égale à la tension de sortie V₀ du premier convertisseur 20.

Lorsque le transistor de puissance 21 est ouvert (état OFF), alors le courant du bus continu circule dans la diode 22. La tension V_{D} aux bornes de la diode est donc nulle, donc V₀ = 0 et V_{B} = V_{IN}. Lorsque le transistor de puissance 21 est fermé (état ON), le courant circule dans le transistor 21 et la tension V_{D} devient alors égale à la tension V_{S} du module de stockage C_{S}, donc V_{B} = V_{IN} + V_{S}. La tension de sortie V₀ varie donc entre 0 et V_{S} et est toujours positive ou nulle. Ainsi, en agissant sur le signal de commande S₂₁ du transistor de puissance 21, il est possible de réguler la tension V_{B} et le courant circulant dans l'inductance 13.

Le second convertisseur 30 est un convertisseur continu/continu bidirectionnel. Il reçoit en entrée la tension V_{B} du bus continu et délivre en sortie la tension V_{S} du module de stockage C_{S}. L'étage d'entrée 30b du second convertisseur 30 est donc directement relié au condensateur de bus C_{B} et l'étage de sortie 30a du second convertisseur 30 est directement relié au module de stockage C_{S}.

D'une façon générale, le second convertisseur 30 peut être un convertisseur continu/continu bidirectionnel en courant et peut être isolé ou non isolé. Les topologies non isolées sont de type demi-pont (half-bridge) à deux niveaux ou à plusieurs niveaux de tension - par exemple de type NPC (Neutral Point Capacitor) ou Flying capacitor (condensateur flottant). Les topologies isolées sont de type commutation douce tout silicium comprenant un transformateur HF encadré par deux convertisseurs continu/continu de type demi-pont ou pont complet (full bridge).

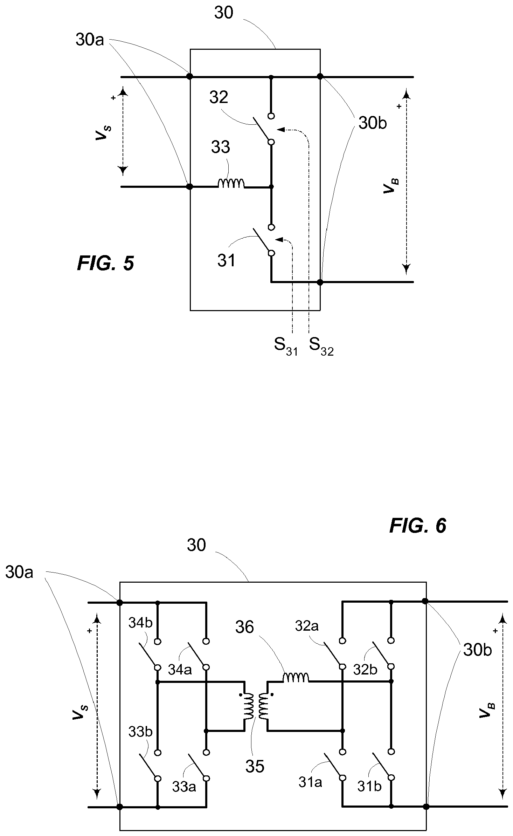

Plusieurs modes de réalisation simples du second convertisseur 30 sont détaillés dans les figures 5 et 6.

La figure 5 montre un mode de réalisation très simple d'un second convertisseur 30 en topologie non-isolée. Il comprend un premier interrupteur actif 31 en série avec un second interrupteur actif 32. De façon préférée, ces interrupteurs actifs sont des interrupteurs de courant bidirectionnels tels que des transistors de puissance de type IGBT, MOSFET ou JFET, dotés chacun d'une diode de roue libre en parallèle. Les transistors de puissance 31, respectivement 32, sont pilotés par des signaux de commande S₃₁, respectivement S₃₂, provenant de l'unité de commande du variateur de vitesse. Les signaux de commande S₃₁, S₃₂ sont des signaux à modulation de large d'impulsion (PWM).

L'étage de sortie 30a du second convertisseur 30 est connecté aux bornes du second transistor de puissance 32, et l'étage d'entrée 30b est connecté aux bornes de l'ensemble formé par le premier transistor de puissance 31 et le second transistor de puissance 32 reliés en série. Le second convertisseur 30 comporte également une inductance de ligne 33 connectée entre le point milieu des deux transistors de puissance 31, 32 et la borne négative du module de stockage C_{S}. L'inductance 33 permet de limiter la variation du courant du module de stockage C_{S} durant la charge ou la décharge du module de stockage C_{S}.

Ce mode de réalisation simplifié du second convertisseur 30 présente l'avantage d'être très économique et d'utiliser très peu de composants mais présente l'inconvénient d'un raccordement direct entre le module de stockage C_{S} et le bus continu, ce qui peut entraîner un stress important sur les transistors de puissance 31, 32 : tension élevée déterminée par la tension de bus V_{B} et courant élevé déterminé par le courant du module de stockage C_{S}.

La figure 6 montre un exemple de réalisation d'un second convertisseur 30 en topologie isolée qui comporte un transformateur haute fréquence 35 à deux enroulements permettant une isolation galvanique tout en autorisant le transfert d'énergie. De chaque côté du transformateur 35, le second convertisseur 30 comprend quatre interrupteurs actifs montés en série deux à deux, notés 31 a,31b,32a,32b côté condensateur de bus C_{B} et 33a,33b,34a,34b côté module de stockage C_{S}. Tous ces interrupteurs actifs sont des interrupteurs de courant bidirectionnels, tels que des transistors de puissance de type IGBT, MOSFET, dotés chacun d'une diode de roue libre et d'une capacité d'amortissement (snubber capacitor) en parallèle (non représentées). Les signaux de commande de ces huit interrupteurs sont des signaux à modulation de déphasage (Phase Shift Modulation) provenant de l'unité de commande du variateur de vitesse. Les enroulements du transformateur 35 sont reliés entre les points milieu des interrupteurs actifs, comme représenté en figure 6. De plus, une inductance de fuite 36 est connectée côté condensateur de bus C_{B} entre un enroulement du transformateur 35 et un point milieu de deux interrupteurs 31b,32b. Cette inductance 36 permet notamment une commutation des interrupteurs à une tension nulle (commutation douce ou soft switching).

Dans une variante du mode de réalisation de la figure 6, il est possible de remplacer les interrupteurs 31b,32b,33b,34b par des condensateurs. Le second convertisseur 30 comporte alors quatre condensateurs et seulement quatre interrupteurs actifs. Dans ce cas, ces quatre interrupteurs actifs ne nécessitent plus de capacité d'amortissement et leur signal de commande est un signal à modulation de fréquence (Frequency modulation). Cette variante présente l'avantage d'être plus économique.

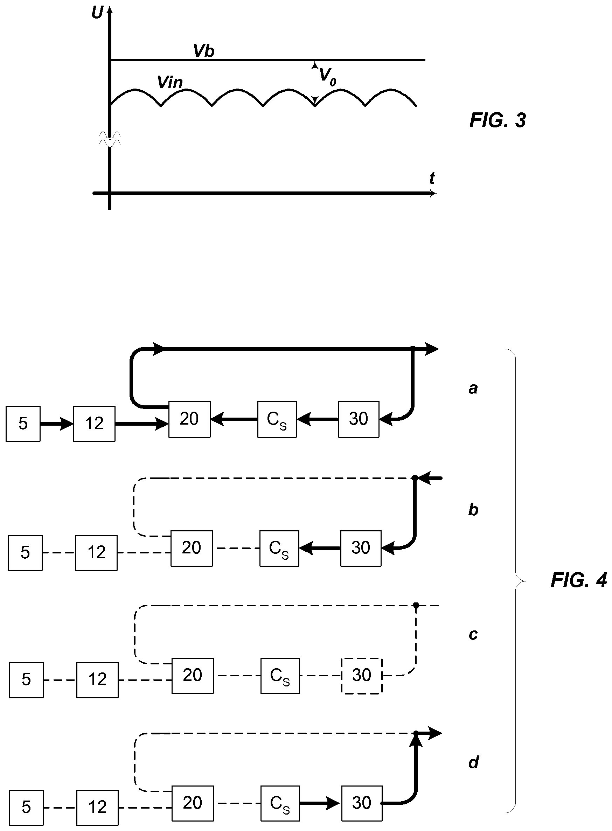

Les différents cas de fonctionnement du dispositif de récupération d'énergie 10 sont illustrés dans les figures 4a à 4d :
- Le mode normal de fonctionnement (fig 4a - mode moteur) correspond à un mode où le variateur est alimenté par le réseau extérieur 5, via le redresseur 12, et utilise l'énergie fournie par le réseau 5 pour alimenter et entraîner la charge M. La tension de bus V_{B} est maintenu constante et supérieure à la tension redressée V_{IN} grâce à l'apport de la tension V₀ en sortie du premier convertisseur 20. Comme indiqué en figure 3, la tension V₀ a donc pour rôle d'augmenter la tension redressée V_{IN} du module redresseur 12 (fonction boost) et d'annuler les ondulations de la tension redressée V_{IN} (fonction ripple-free). Une autre fonction importante du premier convertisseur 20 est de maintenir pratiquement constant le courant circulant dans l'inductance 13, malgré d'éventuelles variations de la tension d'alimentation du réseau extérieur 5. Durant ce mode, l'énergie fournie par le réseau 5 permet également au second convertisseur 30 de charger le super-condensateur C_{S} et/ou de maintenir la tension V_{S} aux bornes du super-condensateur C_{S} à une valeur minimale V_{Smin}.
- La figure 4b correspond au mode freinage, dans lequel le variateur récupère et stocke l'énergie électrique fournie par la charge M lorsque celle-ci est entraînante (comme un moteur d'ascenseur en phase de descente). Cette énergie de freinage récupérée permet de charger le super-condensateur C_{S}. Le second convertisseur 30 a pour rôle de réguler la tension de bus V_{B} et d'augmenter la tension V_{S} aux bornes du super-condensateur C_{S}. Dans ce mode, le signal de commande S₂₁ maintient l'interrupteur actif 21 à l'état ouvert.
- La figure 4c correspond à un mode où aucune énergie n'est consommée ou récupérée par la charge M (mode stand-by).
- La figure 4d correspond au mode restitution, dans lequel l'énergie emmagasinée dans le super-condensateur C_{S} durant le mode freinage est restituée au variateur grâce au second convertisseur 30. Dans ce mode, l'énergie stockée dans le super-condensateur C_{S} est renvoyée vers la charge M et la tension V_{S} diminue donc jusqu'à atteindre la valeur minimale V_{Smin}. Dans ce mode, le signal de commande S₂₁ maintient l'interrupteur actif 21 à l'état ouvert. Lorsque la tension V_{S} atteint la valeur minimale V_{Smin}, la charge M doit de nouveau être alimentée à partir du réseau extérieur 5 et le variateur repasse donc dans le mode de fonctionnement normal 4a.

Par ailleurs, l'architecture proposée par l'invention permet également de se prémunir contre de courtes interruptions du réseau extérieur 5, en autorisant dans ce cas une décharge plus importante du super-condensateur C_{S} de façon à pouvoir maintenir l'alimentation de la charge M.

Il est bien entendu que l'on peut, sans sortir du cadre de l'invention, imaginer d'autres variantes et perfectionnements de détail et de même envisager l'emploi de moyens équivalents.

## Revendications

1. Variateur de vitesse comprenant un bus continu d'alimentation de puissance doté d'une ligne positive (16) et d'une ligne négative (17), un module onduleur (14) alimenté par le bus continu pour fournir une tension variable à une charge électrique (M), et un dispositif de récupération d'énergie (10), **caractérisé en ce que** le dispositif de récupération d'énergie (10) comporte :
- un premier convertisseur continu/continu (20) comprenant un étage d'entrée et un étage de sortie, l'étage de sortie du premier convertisseur (20) étant relié en série sur la ligne positive du bus continu,
- un second convertisseur continu/continu (30) comprenant un étage d'entrée et un étage de sortie, l'étage d'entrée du second convertisseur (30) étant relié entre la ligne positive et la ligne négative du bus continu,
- un module de stockage de l'énergie électrique (Cs) qui est connecté en parallèle avec l'étage d'entrée du premier convertisseur (20) et en parallèle avec l'étage de sortie du second convertisseur (30).

2. Variateur de vitesse selon la revendication 1, **caractérisé en ce que** le module de stockage de l'énergie électrique comporte un ou plusieurs super-condensateurs (Cs).

3. Variateur de vitesse selon la revendication 1, **caractérisé en ce que** le premier convertisseur continu/continu (20) est un convertisseur monodirectionnel non-isolé qui comporte un interrupteur actif (21) et un interrupteur passif (22).

4. Variateur de vitesse selon la revendication 3, **caractérisé en ce que** l'interrupteur passif du premier convertisseur (20) est une diode (22) qui est connectée en série sur la ligne positive du bus continu, l'étage de sortie du premier convertisseur (20) étant connecté aux bornes de la diode (22), et l'étage d'entrée du premier convertisseur (20) étant connecté aux bornes de l'ensemble formé par l'interrupteur actif (21) et l'interrupteur passif (22) reliés en série.

5. Variateur de vitesse selon la revendication 4, **caractérisé en ce que** l'interrupteur actif du premier convertisseur (20) est un transistor de puissance (21), de type MOSFET ou IGBT, qui est commandé par un premier signal de commande (S₂₁) généré par le variateur de vitesse.

6. Variateur de vitesse selon la revendication 1, **caractérisé en ce que** le second convertisseur continu/continu (30) est un convertisseur bidirectionnel non-isolé qui comporte un premier interrupteur actif (31) relié en série avec un second interrupteur actif (32).

7. Variateur de vitesse selon la revendication 6, **caractérisé en ce que** l'étage de sortie du second convertisseur (30) est connecté aux bornes du second interrupteur actif (32), et l'étage d'entrée du second convertisseur (30) est connecté aux bornes de l'ensemble formé par le premier interrupteur actif (31) et le second interrupteur actif (32).

8. Variateur de vitesse selon la revendication 1, **caractérisé en ce que** le second convertisseur continu/continu (30) est un convertisseur bidirectionnel isolé comprenant un transformateur haute-fréquence (35).

## Patentansprüche

1. Umrichter, der eine Leistungsversorgungs-Gleichstromsammelschiene, die mit einer positiven Leitung (16) und mit einer negativen Leitung (17) versehen ist, ein Wechselrichtermodul (14), das von der Gleichstromsammelschiene versorgt wird, um eine variable Spannung an eine elektrische Last (M) zu liefern, und eine Energierückgewinnungsvorrichtung (10) enthält, **dadurch gekennzeichnet, dass** die Energierückgewinnungsvorrichtung (10) aufweist:
- einen ersten Gleichstrom-Gleichstrom-Wandler (20), der eine Eingangsstufe und eine Ausgangsstufe enthält, wobei die Ausgangsstufe des ersten Wandlers (20) in der positiven Leitung der Gleichstromsammelschiene in Reihe geschaltet ist,
- einen zweiten Gleichstrom-Gleichstrom-Wandler (30), der eine Eingangsstufe und eine Ausgangsstufe enthält, wobei die Eingangsstufe des zweiten Wandlers (30) zwischen der positiven Leitung und der negativen Leitung der Gleichstromsammelschiene verbunden ist,
- ein Speichermodul der elektrischen Energie (Cs), das mit der Eingangsstufe des ersten Wandlers (20) und mit der Ausgangsstufe des zweiten Wandlers (30) parallelgeschaltet ist.

2. Umrichter nach Anspruch 1, **dadurch gekennzeichnet, dass** das Speichermodul der elektrischen Energie einen oder mehrere Superkondensatoren (Cs) aufweist.

3. Umrichter nach Anspruch 1, **dadurch gekennzeichnet, dass** der erste Gleichstrom-Gleichstrom-Wandler (20) ein nicht isolierter monodirektionaler Wandler ist, der einen aktiven Schalter (21) und einen passiven Schalter (22) aufweist.

4. Umrichter nach Anspruch 3, **dadurch gekennzeichnet, dass** der passive Schalter des ersten Wandlers (20) eine Diode (22) ist, die in der positiven Leitung der Gleichstromsammelschiene in Reihe geschaltet ist, wobei die Ausgangsstufe des ersten Wandlers (20) mit den Klemmen der Diode (22) verbunden ist, und die Eingangsstufe des ersten Wandlers (20) mit den Klemmen der von den in Reihe geschalteten aktiven Schalter (21) und passiven Schalter (22) gebildeten Einheit verbunden ist.

5. Umrichter nach Anspruch 4, **dadurch gekennzeichnet, dass** der aktive Schalter des ersten Wandlers (20) ein Leistungstransistor (21) der Art MOSFET oder IGBT ist, der von einem ersten Steuersignal (S₂₁) gesteuert wird, das vom Umrichter erzeugt wird.

6. Umrichter Anspruch 1, **dadurch gekennzeichnet, dass** der zweite Gleichstrom-Gleichstrom-Wandler (30) ein nicht isolierter bidirektionaler Wandler ist, der einen mit einem zweiten aktiven Schalter (32) in Reihe geschalteten ersten aktiven Schalter (31) aufweist.

7. Umrichter nach Anspruch 6, **dadurch gekennzeichnet, dass** die Ausgangsstufe des zweiten Wandlers (30) mit den Klemmen des zweiten aktiven Schalters (32) und die Eingangsstufe des zweiten Wandlers (30) mit den Klemmen der vom ersten aktiven Schalter (31) und vom zweiten aktiven Schalter (32) gebildeten Einheit verbunden ist.

8. Umrichter nach Anspruch 1, **dadurch gekennzeichnet, dass** der zweite Gleichstrom-Gleichstrom-Wandler (30) ein isolierter bidirektionaler Wandler ist, der einen Hochfrequenztransformator (35) enthält.

## Claims

1. Variable speed drive comprising a direct-current power supply bus having a positive line (16) and a negative line (17), an inverter module (14) supplied by the direct-current bus in order to supply a variable voltage to an electric load (M), and an energy-recovery device (10), **characterized in that** the energy-recovery device (10) comprises:
- a first direct-current/direct-current converter (20) comprising an input stage and an output stage, the output stage of the first converter (20) being connected in series to the positive line of the direct-current bus,
- a second direct-current/direct-current converter (30) comprising an input stage and an output stage, the input stage of the second converter (30) being connected between the positive line and the negative line of the direct-current bus,
- an electric energy storage module (Cs) which is connected in parallel with the input stage of the first converter (20) and in parallel with the output stage of the second converter (30).

2. Variable speed drive according to Claim 1, **characterized in that** the electric energy storage module comprises one or more supercapacitors (Cs).

3. Variable speed drive according to Claim 1, **characterized in that** the first direct-current/direct-current converter (20) is an uninsulated one-way converter which comprises an active switch (21) and a passive switch (22).

4. Variable speed drive according Claim 3, **characterized in that** the passive switch of the first converter (20) is a diode (22) which is connected in series to the positive line of the direct-current bus, the output stage of the first converter (20) being connected to the terminals of the diode (22), and the input stage of the first converter (20) being connected to the terminals of the assembly formed by the active switch (21) and the passive switch (22) connected in series.

5. Variable speed drive according to Claim 4, **characterized in that** the active switch of the first converter (20) is a power transistor (21) of the MOSFET or IGBT type, which is controlled by a first control signal (S₂₁) generated by the variable speed drive.

6. Variable speed drive according to Claim 1, **characterized in that** the second direct-current/direct-current converter (30) is an uninsulated two-way converter which comprises a first active switch (31) connected in series to a second active switch (32).

7. Variable speed drive according to Claim 6, **characterized in that** the output stage of the second converter (30) is connected to the terminals of the second active switch (32), and the input stage of the second converter (30) is connected to the terminals of the assembly formed by the first active switch (31) and the second active switch (32).

8. Variable speed drive according to Claim 1, **characterized in that** the second direct-current/direct-current converter (30) is an insulated two-way converter comprising a high-frequency transformer (35).
